# EUROPÄISCHE PATENTSCHRIFT

(11) **EP 2 565 080 B1**
(45) Veröffentlichungstag und Bekanntmachung des Hinweises auf die Patenterteilung: **20.04.2016**
(21) Anmeldenummer: 11007008.3
(22) Anmeldetag: 27.08.2011
(51) Int. Cl.: B60Q 3/02, B60Q 3/00

(54) **Beleuchtungsvorrichtung zur Integration in eine Kabinenstruktur, Verfahren zur Bereitstellung der Beleuchtungsvorrichtung und Kabinenstruktur mit der Beleuchtungsvorrichtung**
Lighting device for integration in a cabin structure, method for producing the lighting device and cabin structure with the lighting device
Dispositif d'éclairage pour l'intégration dans une structure de cabine, procédé de préparation du dispositif d'éclairage et structure de cabine dotée du dispositif d'éclairage

(43) Veröffentlichungstag der Anmeldung: 06.03.2013
(73) Patentinhaber: Diehl Aerospace GmbH, 88662 Überlingen (DE); FACC AG, 4910 Ried im Innkreis (AT)
(72) Erfinder: Knopp, Norbert, 91227 Leinburg (DE); Dobler, Stefan, 91077 Neunkirchen am Sand (DE); Schmid, Frank, 92284 Poppenricht (DE); Renz, Marc, 91126 Schwabach (DE); Mörtenhuber, Gerhard, 4712 Michaelnbach (AT); Kammerer, Bernhard, 4755 Zell/Pram (AT); Maushammer, Sven, 4941 Mehrbach (AT); Bauer, Ernst, 4910 Ried/Innkreis (AT)
(74) Vertreter: Diehl Patentabteilung

(56) Entgegenhaltungen:
- EP-A1- 1 348 904
- DE-U1- 9 403 028
- US-A1- 2008 253 122
- US-A1- 2010 019 689

## Beschreibung

Die Erfindung betrifft eine Beleuchtungsvorrichtung zur Integration in eine Kabinenstruktur einer Flugzeugkabine, und ein Verfahren zur Bereitstellung der Beleuchtungsvorrichtung. Des Weiteren betrifft die Erfindung eine Kabinenstruktur mit der Beleuchtungsvorrichtung.

Die Beleuchtungsvorrichtung weist mindestens eine Leuchteinrichtung auf, die dazu ausgebildet ist, die Flugzeugkabine zu beleuchten. Die Leuchteinrichtung umfasst eine Lichtquelle und einen Lichtquellenträger, auf dem die Lichtquelle angeordnet ist. Die Beleuchtungsvorrichtung umfasst weiterhin mindestens eine transparente Abdeckeinrichtung, die dazu ausgebildet ist, die Leuchteinrichtung zur Flugzeugkabine hin zu verblenden. Die Beleuchtungsvorrichtung ist dazu ausgebildet, als ein einbaufertiges Funktionsbauteil in der Kabinenstruktur integriert zu werden.

Beleuchtungsvorrichtungen für Flugzeugkabinen sind oftmals in einer Kabinenstruktur, beispielsweise in einer Innenverkleidung der Flugzeugkabine, integriert. Die Beleuchtungsvorrichtungen umfassen zumeist einen Leuchtenabschnitt und einen Diffusorabschnitt, wobei der Leuchtenabschnitt zumeist separat in der Innenverkleidung integriert ist und der Diffusorabschnitt anschließend über den Leuchtenabschnitt montiert wird.

Beispielsweise beschreibt die Druckschrift DE 10 2006 034 817 A1 eine Luftfahrzeuglichtquelle mit mindestens einer Leuchtdiode und einem Diffusor, wobei die Leuchtdiode dazu ausgebildet ist, Licht zu erzeugen und in einem weitestgehend punktförmigen Lichtstrahl abzustrahlen. Der Diffusor ist dazu ausgebildet, das Licht zu brechen und den Lichtstrahl dabei aufzuweiten. Hierfür weist der Diffusor einen ersten Diffusorkörper mit einem ersten Brechungsindex auf. In dem ersten Diffusorkörper sind mehrere zweite Diffusorkörper mit einem zweiten Brechungsindex angeordnet.

Aus dem Stand der Technik sind auch Beleuchtungsvorrichtungen bekannt geworden, bei denen die Lichtquelle und die Abdeckeinrichtung als ein einstückiges Bauteil ausgebildet Sind.

So offenbart die Druckschrift DE 10 2005 039 651 A1 einen Illuminationsstreifen, der in einer Handlaufausnehmung an einem Handlauf in einer Flugzeugkabine anordbar ist und dazu ausgebildet ist, eine Sitzplatznummerierung an einem Hatrack auszuleuchten. Der Illuminationsstreifen ist vorzugsweise flexibel und aufrollbar ausgebildet. Um eine möglichst gleichmäßige Lichtverteilung der Leuchtdioden zu erzeugen und um eine Wärmeisolierung der Leuchtdioden zu gewährleisten, ist eine Diffusorlinse auf die Leuchtdioden aufgebraucht

Weitere gattungsgemäße Leuchteinrichtungen mit lichtdurchlässigen Abdeckungen, welche ggf. dazu ausgebildet sein können im vormontierten, einbaufertigen Zustand in eine Kabinenstruktur integriert zu werden sind beispielsweise bekannt aus der US 2010/019689 A1, DE 94 03 028 U1, US 2008/253122 A1 und EP 1 348 904 A1.

Der Erfindung liegt die Aufgabe zugrunde, eine funktional verbesserte Beleuchtungsvorrichtung für die Flugzeugkabine bereit zu stellen.

Diese Aufgabe wird durch eine Beleuchtungsvorrichtung mit den Merkmalen des Anspruchs 1, durch ein Verfahren zur Bereitstellung der Beleuchtungsvorrichtung mit den Merkmalen des Anspruchs 10 und durch eine Kabinenstruktur mit der Beleuchtungsvorrichtung mit den Merkmalen des Anspruchs 11 gelöst. Bevorzugte oder vorteilhafte Ausführungsformen der Erfindung ergeben sich aus den Unteransprüchen, der nachfolgenden Beschreibung und/oder den beigefügten Figuren.

Erfindungsgemäß wird eine Beleuchtungsvorrichtung zur Integration in eine Kabinenstruktur einer Flugzeugkabine vorgeschlagen. Die Beleuchtungsvorrichtung kann vorzugsweise an einem Flugzeugskelett, d.h. an tragenden Elementen der Flugzeugkabine, oder an mindestens einem Verkleidungselement, welches das Flugzeugskelett zumindest teilweise verkleidet, angeordnet sein oder in diesem integriert sein. Besonders bevorzugt ist, dass die Beleuchtungsvorrichtung an einem Kabinendach oder an Seitenwänden der Flugzeugkabine angeordnet ist und sich optisch passend, vorzugsweise bündig, in die weiteren Verkleidungselemente einfügt. Alternativ oder optional ergänzend ist es möglich, dass die Beleuchtungseinrichtung an einem Gepäckstauraumfach in der Flugzeugkabine, insbesondere an einem sog. Hatrack, angeordnet ist.

Bevorzugt ist, dass die Beleuchtungsvorrichtung dazu ausgebildet ist, die Flugzeugkabine im eingebauten Zustand vor, während oder nach dem Flug zu beleuchten. Beispielsweise ist die Beleuchtungsvorrichtung als ein Stimmungslicht ausgebildet, mit der flächiges, blendfreies Licht, z.B. in verschiedenen Lichtfarben und/oder Lichtintensitäten, in die Flugzeugkabine abgestrahlt werden kann.

Die Beleuchtungsvorrichtung umfasst mindestens eine Leuchteneinrichtung, die dazu ausgebildet ist, Licht in die Flugzeugkabine abzustrahlen. Die Leuchteneinrichtung umfasst eine Lichtquelle und einen Lichtquellenträger, auf dem die Lichtquelle angeordnet ist. Vorzugsweise ist die Lichtquelle auf dem Lichtquellenträger montiert und im integrierten Zustand der Beleuchtungsvorrichtung in die Kabinenstruktur zur Flugzeugkabine gerichtet.

Vorzugsweise ist der Lichtquellenträger als eine rechteckige, quadratische oder kreisrunde Trägerplatte ausgebildet. Der Lichtquellenträger kann optional auch als ein dreidimensionales Trägerbauteil ausgebildet sein, der jede beliebige Außenkontur aufweisen kann.

Der Lichtquellenträger ist vorzugsweise aus einem flammhemmenden Kunststoffmaterial mit hoher Bruchfestigkeit, Schlagzähigkeit, chemischer Resistenz und/oder thermischer Formstabilität ausgebildet. Mögliche zu verwendende Kunststoffmaterialien hierfür sind z.B. Polycarbontat (PC), Acrylnitril-Butadien-Styrol (ABS), Polybutylenterephthalat (PBT) oder deren Blends. Auch Faserverbundwerkstoffe (z.B. Kunststoff mit Glasfaseranteilen) oder Leichtmetalle, wie z.B. Aluminium, können für die Herstellung des Lichtquellenträgers geeignet sein.

Insbesondere für den Einsatz in Flugzeugen sind schwer entzündliche Materialien zu bevorzugen, in vielen Fällen sogar gesetzlich vorgeschrieben, um Gefahren durch einen Brand in der Flugzeugkabine zu vermeiden. Durch die guten mechanischen Eigenschaften sind die genannten Kunststoffmaterialien für den Einsatz in Flugzeugen geeignet, da sie sich durch eine lange Lebensdauer auszeichnen und Erschütterungen, z.B. durch einen plötzlichen Druckabfall in der Kabine, Stand halten können. Ebenfalls halten die genannten Materialien einer sich durch die Lichtquelle entwickelnden Hitze weitestgehend stand, so dass eine Gefahr der thermischen Verformung des Lichtquellenträgers während des Betriebs der Lichtquelle reduziert werden kann.

Im Rahmen der Erfindung ist es möglich, dass in den Lichtquellenträger Öffnungen, z.B. Schlitze, eingebracht sind, damit die Hitze entweichen kann. Somit kann ein Hitzestau in der Beleuchtungsvorrichtung vermieden werden.

Die Lichtquelle ist beispielsweise als eine Vielzahl an Leuchtdioden (LEDs) ausgebildet. Die LEDs sind vorzugsweise voneinander beabstandet, insbesondere aneinandergereiht auf dem Lichtquellenträger angeordnet. Denkbar ist auch, dass eine Leuchtstoffröhre als Lichtquelle Verwendung findet.

Die Beleuchtungsvorrichtung weist weiterhin mindestens eine lichtdurchlässige Abdeckeinrichtung auf, die dazu ausgebildet ist, die Leuchteinrichtung zur Flugzeugkabine hin zu verblenden. Vorzugsweise verdeckt die Abdeckeinrichtung den Blick der Passagiere auf die Leuchteinrichtung und verwehrt einen Zugriff der Passagiere auf die Leuchteinrichtung.

Hierzu ist auch die Abdeckeinrichtung, wie bereits vorher für die Leuchteinrichtung beschrieben, aus einem schwer entflammbaren Kunststoffmaterial mit guten mechanischen Eigenschaften gebildet. Besonders bevorzugt für die Herstellung der Abdeckeinrichtung ist die Verwendung von Polycarbonat (PC), Polymethyacrylat (PMMA) oder einem Blend aus beiden Materialien. Diese Materialien eignen sich insbesondere zur Herstellung der Abdeckeinrichtung in einem thermischen Spritzguss- oder Umformprozess.

Die Beleuchtungsvorrichtung ist dazu ausgebildet, als ein einbaufertiges Funktionsbauteil in der Kabinenstruktur integriert zu werden. Hierzu sind die Leuchteinrichtung und die Abdeckeinrichtung dazu ausgebildet, vorzugsweise form- und/oder kraftschlüssig miteinander gekoppelt und/oder verbunden zu werden, sodass sie nach der Kopplung und/oder Verbindung einstückig ausgebildet sind und das einbaufertige Funktionsbauteil bilden. Einstückig bedeutet in diesem Zusammenhang, dass die Leuchteinrichtung und die Abdeckeinrichtung verliersicher, fest, sicher und schwer voneinander trennbar zu dem einbaufertigen Funktionsbauteil verbunden sind. Es setzt jedoch nicht voraus, dass beide Einrichtungen stoffschlüssig miteinander verbunden sein müssen. Vielmehr ist es bevorzugt, dass die beiden Einrichtung bei Bedarf, z.B. in einem Wartungsfall, beschädigungs- und/oder zerstörungsfrei voneinander getrennt und erneut miteinander gekoppelt und/oder verbunden werden können.

Optional können die Abdeckeinrichtung und die Leuchteinrichtung direkt, insbesondere unmittelbar miteinander verbunden sein. Möglich ist auch, dass die beiden Einrichtungen über ein Zwischenelement miteinander koppelbar oder gekoppelt sind.

Die Beleuchtungsvorrichtung in der Form bzw. Funktion als das einbaufertige Funktionsbauteil ist vorzugsweise als eine längliche bzw. lang gestreckte Lichtleiste ausgebildet. Beispielsweise weist die Lichtleiste in der Draufsicht eine rechteckige oder im Wesentlichen rechteckige Außenkontur auf. Hierbei weist die Beleuchtungsvorrichtung eine Länge von vorzugsweise mindestens 0,5 m, insbesondere mindestens 1 m, im Speziellen mindestens 1,5 m auf. Eine Breite der Beleuchtungsvorrichtung beträgt vorzugsweise mindestens 150 mm, insbesondere mindestens 250 mm, im Speziellen mindestens 350 mm. Im eingebauten Zustand in die Flugzeugkabine erstreckt sich die Beleuchtungsvorrichtung in einer Längsrichtung des Flugzeugs, beispielsweise oberhalb eines Mittelgangs oder oberhalb von Sitzreihen.

Erfindungsgemäß ist die Beleuchtungsvorrichtung biegesteif, insbesondere steif, starr, unflexibel, anpassungsunfähig und/oder unnachgiebig ausgebildet, wobei die Beleuchtungsvorrichtung eine an der Abdeckeinrichtung angeordnete Befestigungseinrichtung umfasst, die zum form- und/oder kraftschlüssigen Eingriff in eine Haltestruktur an der Kabinenstruktur ausgebildet ist. Hierbei ist die Befestigungseinrichtung vorzugsweise mit der Haltestruktur kompatibel.

Besonders bevorzugt ist dabei, dass die Leuchteinrichtung, insbesondere der Lichtquellenträger aus dem bereits beschriebenen Kunststoffmaterial, Faser-Verbund-Werkstoff oder Leichtmetall gebildet ist und somit biegesteif ausgebildet ist. Alternativ oder optional ergänzend ist die Abdeckeinrichtung biegesteif ausgebildet, wobei sie vorzugsweise aus dem weiter oben beschriebenen Kunststoffmaterial (PC, PMMA, PC/PMMA-Blend) gebildet ist.

Es ist von Vorteil, dass die Beleuchtungsvorrichtung in der Ausbildung als das einbaufertige Funktionsbauteil vollständig und in einem Montagevorgang in die Kabinenstruktur integriert werden kann. Somit kann eine Montagezeit in vorteilhafter Weise reduziert werden und entsprechende Montagekosten eingespart werden.

Weiterhin sind keine separaten Befestigungsmittel für die Leuchteinrichtung und die Abdeckeinrichtung erforderlich, da beide Einrichtungen mit denselben Befestigungseinrichtungen an die Kabinenstruktur montiert werden können. Hierdurch können die Kosten für die entfallenen Befestigungsmittel und deren Gewicht eingespart werden, was sich vorteilhaft auf einen Kraftstoffverbrauch des Flugzeugs auswirken kann.

Eine bevorzugte Ausführungsform der Erfindung sieht vor, dass die Leuchteneinrichtung und/oder die Abdeckeinrichtung mindestens eine gemeinsame mechanische Schnittstelle zur gegenseitigen Verbindung und/oder Kopplung zum Funktionsbauteil aufweist/aufweisen. Durch die form- und/oder kraftschlüssige Kopplung und/oder Verbindung der Leuchteinrichtung und der Abdeckeinrichtung an der gemeinsamen mechanischen Schnittstelle wird also das einbaufertige, insbesondere einstückige Funktionsbauteil gebildet.

Die mechanische Schnittstelle ist vorzugsweise dazu ausgebildet, die Leuchteinrichtung und die Abdeckeinrichtung form- und/oder kraftschlüssig, insbesondere sicher und ausreichend fest miteinander zu verbinden. Somit kann ein unbeabsichtigtes Auseinanderfallen, z.B. durch Schwingungen oder Erschütterungen in der Flugzeugkabine vermieden werden. Jedoch gewährleistet die mechanische Schnittstelle vorzugsweise eine zerstörungs- und/oder beschädigungsfreie Lösung der Abdeckeinrichtung von der Leuchteneinrichtung. Dies ist insbesondere bei der Wartung der Beteuchtungsvorrichtung von Vorteil, beispielsweise wenn die Lichtquelle durch eine neue Lichtquelleersetzt werden muss. Beispielsweise ist die mechanische Schnittstelle als eine Schnapp-, Haken- und/oder Clipsverbindung realisiert.

So kann die Abdeckeinrichtung z.B. an ihren Seitenkanten Nuten aufweisen, in die Stirnseiten des Lichtquellenträgers unter Spannung eingreifen und darin einrasten. Möglich im Rahmen der Erfindung ist auch, dass die Leuchteinrichtung Seitenflächen aufweist, an denen mindestens eine Aussparung, z.B. eine Einhakvorrichtung oder Längsnut, integriert ist. Vorzugsweise weist die Abdeckeinrichtung entsprechend ausgebildete Haken-, Steg- oder Clipselemente auf, die dazu ausgebildet sind, in die Aussparung eingehakt, eingeschoben und/oder eingeclipst zu werden. Durch eine solche mechanische Schnittstelle können die beiden Einrichtungen schnell, sicher, effektiv und mit geringem Montageaufwand miteinander gekoppelt und/oder verbunden werden.

Insbesondere ist die Befestigungseinrichtung dazu ausgebildet, die Beleuchtungsvorrichtung an der Kabinenstruktur fest und sicher zu befestigen. In vorteilhafter Weise kann die Beleuchtungsvorrichtung dabei als das einbaufertige Funktionsbauteil durch die Befestigungseinrichtung einstückig an die Kabinenstruktur montiert werden. Ebenso ist es vorzugsweise möglich, die Beleuchtungsvorrichtung einstückig, insbesondere als das Funktionsbauteil, von dieser wieder abzunehmen und bei Bedarf durch eine andere Beleuchtungsvorrichtung zu ersetzen.

Beispielsweise ist die Befestigungseinrichtung als mindestens ein Haken ausgebildet, mit dem die Beleuchtungsvorrichtung einstückig in die Haltestruktur einhakbar ist. In einer anderen möglichen Ausbildung ist die Befestigungseinrichtung als mindestens eine Schiene, Leiste oder Nut ausgebildet. Mit dieser ist die Beleuchtungsvorrichtung als das einbaufertige Funktionsbauteil in die Haltestruktur an der Kabinenstruktur einschiebbar. Bevorzugt ist, dass die Schiene, Leiste oder Nut mindestens ein Einrastmittel aufweist, das dazu ausgebildet ist, die Beleuchtungsvorrichtung beim Einschieben in eine richtige Position zu bringen und dort sicher und dauerhaft zu halten.

In einer möglichen erfindungsgemäßen Umsetzung ist die Lichtquelle als eine Vielzahl von Leuchtdioden (LEDs), als Rot-Grün-Blau-LEDs (RGB-LEDs) oder als organische Leuchtdioden (OELDs) realisiert. Vorzugsweise sind diese aneinander gereiht auf dem Lichtquellenträger angeordnet. Beispielsweise können die LEDs, RGB-LEDs oder OELDs in einer einzelnen Reihe nacheinander aufgereiht sein, sie können aber auch in zwei oder mehr Reihen oder in anderen geometrischen Formen (z.B. quadratisch, rechteckig, kreisförmig, etc.) oder in Mustern (z.B. sternförmig) auf dem Lichtquellenträger angeordnet sein.

In einer möglichen erfindungsgemäßen Ausgestaltung ist die Abdeckeinrichtung dazu ausgebildet, die Lichtquelle vor Berührung und/oder vor Beschädigung durch Passagiere in der Flugzeugkabine zu schützen. In der Ausbildung als mechanische Schutzeinrichtung weist das Trägermaterial der Abdeckeinrichtung hierfür vorzugsweise geeignete mechanische Eigenschaften, wie z.B. hohe Steifigkeit und Bruchfestigkeit auf. Bevorzugt ist, dass die Abdeckeinrichtung transparent bzw. transluzent oder sogar wasserklar ausgebildet ist, sodass das Licht durch diese hindurch stahlen kann.

Besonders bevorzugt ist weiterhin, dass die Abdeckeinrichtung, insbesondere ergänzend zur oben beschriebenen mechanischen Schutzfunktion, dazu ausgebildet ist, das von der Lichtquelle erzeugte Licht flächig und/oder diffus in die Flugzeugkabine abzustrahlen. In dieser Funktion ist die Abdeckeinrichtung also als ein Diffusor für das in ihn eingekoppelte Licht ausgebildet. Somit weist die Abdeckeinrichtung eine Doppelfunktion auf: Zum einen ist sie als mechanischer Schutz vor Zugriff und/oder Beschädigung auf die Leuchteinrichtung und/oder Lichtquelle ausgebildet, zum anderen ist sie als Diffusor dazu ausgebildet, das Licht abzulenken und/oder zu streuen und homogen, flächig und/oder diffus in die Flugzeugkabine auszukoppeln.

Insbesondere ist die Abdeckeinrichtung dazu ausgebildet, einen zumeist punktförmigen Lichtstrahl, der durch die genannten Leuchtdioden erzeugt wird, zu erweitern und das Licht homogen und/oder gleichmäßig verteilt in die Flugzeugkabine auszukoppeln. Somit kann in vorteilhafter Weise eine blendfreie Kabinenbeteuchtung erzeugt und eine angenehme Atmosphäre in der Flugzeugkabine geschaffen werden.

Eine mögliche erfindungsgemäße Umsetzung sieht vor, dass die Abdeckeinrichtung Streupartikel und/oder Streustrukturen aufweist, an denen das von der Lichtquelle erzeugte Licht gestreut und/oder abgelenkt wird. Vorzugsweise wird durch die Streupartikel und/oder Streustrukturen eine Mehrfachreflexion des Lichts beim Durchgang durch die Abdeckeinrichtung erzeugt.

Beispielsweise können die Streupartikel durch Lufteinschlüsse und/oder Pigmente und/oder Volumenstreuer im Material der Abdeckeinrichtung gebildet sein. Die Streustrukturen sind beispielsweise als Auskerbungen, Aufrauungen und/oder Prägungen in das Trägermaterial der Abdeckeinrichtung eingebracht.

Eine mögliche erfindungsgemäße Ausgestaltung sieht vor, dass zwischen der Lichtquelle und der Abdeckeinrichtung ein Zwischenraum von mindestens 2 cm, vorzugsweise mindestens 3 cm, im Speziellen von mindestens 4 cm Breite angeordnet ist. Insbesondere ist die Lichtquelle und die Abdeckeinrichtung beabstandet voneinander angeordnet. Dies wird beispielsweise dadurch erreicht, dass sich die Abdeckeinrichtung bei/nach der Kopplung und/oder Verbindung der beiden Einrichtungen bogenförmig um die Leuchteinrichtung erstreckt und der Lichtquelle somit ausreichend Platz in dem durch die Bogenform gebildeten Zwischenraum bietet.

Alternativ oder optional ergänzend beträgt der optische Weg des von der Lichtquelle erzeugten Lichts von der Lichtquelle bis zu einer Sichtseite der Abdeckeinrichtung mindestens 2 cm, vorzugsweise mindestens 3 cm, im Speziellen mindestens 4 cm. Der optische Weg *L* beschreibt die Weglänge s, die das Licht _in einem Medium mit der Brechzahl *n* zurücklegt(*L* = *n* x *s*).

Im Rahmen der Erfindung ist es ebenfalls möglich, dass die Abdeckeinrichtung Verbindungsflächen umfasst, die derart ausgebildet sind, dass der Zwischenraum zwischen der Lichtquelle und der Abdeckeinrichtung auch bei der Verbindung und/oder Kopplung der beiden Einrichtungen gewährleistet ist.

Ein weiterer Gegenstand der Erfindung betrifft ein Verfahren zur Montage einer Beleuchtungsvorrichtung, vorzugsweise der Beleuchtungsvorrichtung nach einem der Ansprüche 1 bis 9 und/oder nach der bisherigen Beschreibung, in eine Kabinenstruktur. Das Verfahren umfasst eine Fertigung der Leuchteinrichtung, eine Fertigung der Abdeckeinrichtung, eine gegenseitige Befestigung und/oder Kopplung beider Einrichtungen zur Bildung eines/des einbaufertigen Funktionsbauteils und ein Anbringen der Beleuchtungsvorrichtung an der Kabinenstruktur mittels einer an der Abdeckeinrichtung angeordneten, zum form- und/oder kraftschlüssigen Eingriff in eine Haltestruktur an der Kabinenstruktur ausgebildeten Befestigungseinrichtung.

Vorzugsweise umfasst die Fertigung der Leuchteinrichtung den Spritzguss- oder Umformprozess und ein Anbringen der Lichtquelle auf einem/dem Lichtquellenträger.

Insbesondere umfasst die Fertigung der Abdeckeinrichtung ebenfalls den Spritzgieß- oder Umformprozess. Hierbei werden vorzugsweise (die) Streupartikel und/oder (die) Streustrukturen in das Trägermaterial der Abdeckeinrichtung eingebracht.

Die gegenseitige Befestigung und/oder Kopplung der Leuchteinrichtung und der Abdeckeinrichtung erfolgt in einer bevorzugten Ausführung über eine/die gemeinsame mechanische Schnittstelle, insbesondere über ein Einschnappen, Einhaken und/oder Einclipsen der Leuchteinrichtung an der Abdeckeinrichtung oder der Abdeckeinrichtung an der Leuchteinrichtung. Im Speziellen wird durch die gegenseitige Befestigung und/oder Kopplung der beiden Einrichtungen das einbaufertige, insbesondere einstückige Funktionsbauteil gebildet.

Vorzugsweise umfasst das Verfahren zur Herstellung der Beleuchtungsvorrichtung eine Integration der Beleuchtungsvorrichtung als das einbaufertige Funktionsbauteil in eine/die Kabinenstruktur. Insbesondere erfolgt die Integration in die Kabinenstruktur über eine/die Befestigungseinrichtung, welche Bestandteil der Beleuchtungsvorrichtung ist. Vorzugsweise wird die Befestigungsvorrichtung in eine Haltestruktur an der Kabinenstruktur eingehakt oder eingeschoben.

Ein weiterer Gegenstand der Erfindung betrifft eine Kabinenstruktur mit der Beleuchtungsvorrichtung nach einem der Ansprüche 1 bis 9 und/oder nach der bisherigen Beschreibung. Die Kabinenstruktur umfasst vorzugsweise ein Flugzeugskelett und/oder mindestens ein das Flugzeugskelett verkleidendes Verkleidungselement. Insbesondere umfasst die Kabinenstruktur mindestens einen Gepäckstauraum über den Sitzplätzen im Flugzeug, also einen sog. Hatrack. Alternativ oder optional ergänzend umfasst die Kabinenstruktur die Kabinendecke und/oder Seitenwände der Flugzeugkabine.

In einer bevorzugten Ausführungsform der Kabinenstruktur ist die Beleuchtungsvorrichtung dazu ausgebildet ist, die Flugzeugkabine mit einem direkten Licht zu beleuchten. Insbesondere strahlt die Beleuchtungseinrichtung das Licht auf direktem Weg in die Flugzeugkabine, insbesondere in Richtung der Passagiere, ab. Beispielsweise wird das Licht von der Kabinendecke in Richtung des Kabinenbodens oder von einer Seitenwand der Flugzeugkabine in Richtung der gegenüberliegenden Seitenwand abgestrahlt.

In einer bevorzugten konstruktiven Ausgestaltung der Kabinenstruktur, insbesondere um die direkte Beleuchtung der Flugzeugkabine umzusetzen, ist die Leuchteinrichtung zur Flugzeugaußenseite gerichtet. Die Abdeckeinrichtung ist in Richtung des Kabinenbodens unterhalb oder in Richtung der gegenüberliegenden Seitenwand vor der Leuchteinrichtung angeordnet, so dass das Licht direkt in die Flugzeugkabine ausgekoppelt werden kann.

Beispielsweise kann die Beleuchtungsvorrichtung als ein Stimmungslicht für Flugzeugkabine ausgebildet sein. Hierzu ist sie vorzugsweise mit einer Steuereinrichtung verbunden oder verbindbar. Hierbei ist denkbar, dass die Steuereinrichtung die Beleuchtungsvorrichtung ansteuert, farbiges Licht in den Innenraum der Flugzeugkabine abzustrahlen. Zum Beispiel kann die Lichtfarbe an eine Tages- oder Nachtzeit oder an eine Situation in der Flugzeugkabine angepasst werden. Beispielsweise wird ein warmer Rot-, Orange- oder Braunton erzeugt, wenn sich die Passagiere in der Flugzeugkabine entspannen wollen. Beim Essen Steuereinrichtung beispielsweise ein grünliches oder bläuliches Licht ansteuern, um eine angenehme Atmosphäre zu schaffen.

Weitere Merkmale, Vorteile und Wirkungen der Erfindung ergeben sich aus der nachfolgenden Beschreibung bevorzugter Ausführungsbeispiele der Erfindung. Dabei zeigen:
- Figur 1: einen perspektivischen Schnitt durch eine Beleuchtungsvorrichtung;
- Figur 2: einen perspektivischen Schnitt durch eine alternative Beleuchtungsvorrichtung.

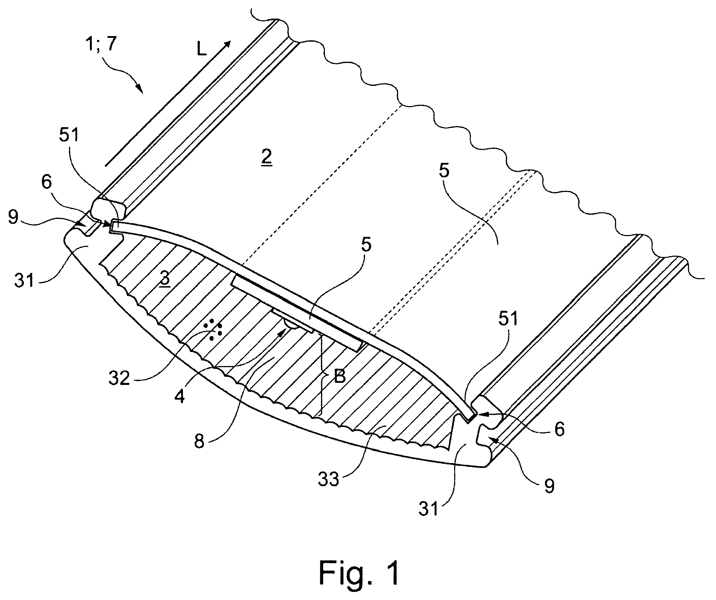

Figur 1 zeigt eine Beleuchtungsvorrichtung 1 in einer perspektivischen Schnittdarstellung. Die Releucfltungsvorrichtung 1 ist dazu ausgebildet, in eine Kabinenstruktur einer Flugzeugkabine integriert zu werden. Insbesondere kann die Beleuchtungsvorrichtung 1 an einem Flugzeugskelett und/oder an Verkleidungsteilen, die das Flugzeugskelett zur Flugzeugkabine hin verkleiden, angeordnet werden. Beispielsweise ist die Beleuchtungseinrichtung 1 dazu ausgebildet, am Kabinendach, an Seitenwänden und/oder an einem Gepäckstauraum (Hatrack) oberhalb von Passegiersitzen montiert zu werden.

Die Beleuchtungsvorrichtung 1 umfasst eine Leuchteinrichtung 2 und eine lichtdurchläs sige Abdeckeinrichtung 3. Die Leuchteinrichtung 2 weist eine Lichtquelle 4 und einen z.B. plattenartig ausgebildeten Lichtquellenträger 5 auf, welcher aus einem biegesteifen Kunststoffmaterial, z.B. ABS, oder aus einem Leichtmetall, z.B. Aluminium, gebildet ist.

Die Lichtquelle 4 ist als eine Vielzahl an Rot-Grün-Blau-Leuchtdioden 4 (RGB-LEDs) ausgebildet. Diese sind in einer Längserstreckung der Beleuchtungsvorrichtung 1 aneinander gereiht auf dem Lichtquellenträger 5 angeordnet, von wo aus sie Licht in Richtung der Abdeckeinrichtung 3 und somit in die Flugzeugkabine abstrahlen.

In der Schnittansicht weist die Leuchteinrichtung 2 und die Abdeckeinrichtung 3 eine bogenförmige Außenkontur auf, wobei die Abdeckeinrichtung 3 die Leuchteinrichtung 2, insbesondere den Lichtquellenträger 5 umgreift und die Leuchteinrichtung 2 form- und/oder kraftschlüssig an ihr befestigt. Dadurch dass die Abdeckeinrichtung 3 somit auch die RGB-LEDs 4 umgreift, schützt sie diese vor einem Zugriff und/oder vor einer Beschädigung durch Passagiere, die sich in der Flugzeugkabine befinden. Weiterhin dient die Abdeckeinrichtung 3 gleichzeitig als Hitzeschutz vor der durch die RGB-LEDs 4 erzeugten Wärme beim Abstrahlen des Lichts.

Zur form- und/oder kraftschlüssigen Kopplung und/oder Befestigung der Abdeckeinrichtung 3 und der Leuchteinrichtung 2 weisen diese zwei gemeinsame mechanische Schnittstellen zur gegenseitigen Verbindung und/oder Kopplung zu einem einbaufertigen, insbesondere einstückigen Funktionsbauteil 7 auf.

An Seitenkanten 31 der Abdeckeinrichtung 3 sind die mechanischen Schnittstellen 6 als in die Längserstreckung L der Beleuchtungsvorrichtung 1 gerichtete Nuten 6 ausgebildet. Die Seitenkanten 51 der Leuchteinrichtung 2, insbesondere der Lichtquellenträger 5, sind dazu ausgebildet, in die Nuten 6 einzugreifen. Insbesondere weist der Lichtquellenträger 5 eine Materialstärke auf, mit der er unter Spannung passgenau in die Nut eingeschnappt, sodass die Leuchteinrichtung 2 und die Abdeckeinrichtung 3 form- und/oder kraftschlüssig miteinander gekoppelt und/oder verbunden sind.

Im gekoppelten und/oder verbundenen Zustand ist zwischen der Lichtquelle 4 und der Abdeckeinrichtung 3 ein freier Zwischenraum 8 angeordnet. Eine Breite B des freien Zwischenraums 8 und/oder der kleinste Abstand B zwischen der Lichtquelle 4 und der Abdeckeinrichtung 3 beträgt mindestens 2 cm, vorzugsweise mindestens 3 cm, insbesondere mindestens 4 cm.

Durch die Kopplung und/oder Verbindung der Leuchteinrichtung 3 mit der Abdeckeinrichtung 2 ist die Beleuchtungsvorrichtung 1 als das einbaufertige, insbesondere einstückige Funktionsbauteil 7 ausgebildet. Das Funktionsbauteil 7 ist in der Schnittansicht oval oder mandelförmig ausgebildet.

Die Beleuchtungsvorrichtung 1, insbesondere das Funktionsbauteil 7, weist eine Befestigungseinrichtung 9 auf, die als eine Schiene oder Längsnut ausgebildet ist und sich in Längserstreckung L der Beleuchtungsvorrichtung 1 entlang der Seitenkanten 31 der Abdeckeinrichtung 3 erstreckt.

Die Befestigungseinrichtung 9 ist zum form- und/oder kraftschlüssigen Eingriff in eine nicht gezeigte Haltestruktur an der Kabinenstruktur ausgebildet. In diesem Fall ist die Haltestruktur als eine zur Schiene oder Längsnut kompatible Leiste oder Feder ausgebildet. Zur Montage wird die Schiene oder Längsnut in die Haltestruktur eingeschoben, so dass sie sicher an der Kabinenstruktur befestigt ist.

Die Haltestruktur ist so in der Kabinenstruktur integriert, dass sich die Beleuchtungsvorrichtung 1 als das Funktionsbauteil 7 in die Verkleidung der Kabinenstruktur optisch passend einfügt. Zum Beispiel schließt die Beleuchtungseinrichtung 1 bündig mit den das Flugzeugdach oder die Seitenwände verkleidenden Verkleidungselementen ab. Möglich ist auch, dass die Beleuchtungsvorrichtung 1 als das einbaufertige Funktionsbauteil 7 in einem oder mehreren Hatracks vorzugsweise bündig mit deren Außenseiten angeordnet ist.

Die reihenweise auf dem Lichtquellenträger 5 angeordneten RGB-LEDs 4 sind dazu ausgebildet, weißes Licht oder Licht in veränderbaren Lichtfarben zu erzeugen und als nahezu punktförmige Lichtstrahle in Richtung der Abdeckeinrichtung 3 abzustrahlen.

Die Abdeckeinrichtung 3 ist aus einem lichtdurchlässigen, insbesondere transparenten, transluzenten und/oder wasserklaren Thermoplasten, z.B. aus einem Polycarbonat/Polymethylacrylat-Blend (PC/PMMA-Blend) als Trägermaterial gebildet. So kann das Licht der RGB-LEDs 4 durch die Abdeckeinrichtung 3 in Richtung der Flugzeugkabine hindurch scheinen.

Die Abdeckeinrichtung 3 weist in ihrem Trägermaterial integrierte Streupartikel 32, wie z.B. Lufteinschlüsse, Volumenstreuer oder Pigmente, auf. Zudem umfasst die Abdeckeinrichtung 3 in und/oder auf das Trägermaterial eingebrachte Streustrukturen 33, welche z.B. durch Aufrauungen oder Einkerbungen insbesondere an den Oberflächen der Abdeckeinrichtung 3 gebildet sind.

Die Streupartikel 32 und/oder Streustrukturen 33 sind dazu ausgebildet, das von den RGB-LEDs 4 erzeugte Licht beim Durchtritt durch die Abdeckeinrichtung 3 zu streuen und/oder abzulenken. Hierbei ist die Abdeckeinrichtung 3 als ein Diffusor für die Lichtstrahlen der RGB-LEDs 4 ausgebildet, wodurch diese von der nahezu punktförmigen Gestalt zu einem Flächenlicht erweitert werden. Durch die Diffusion an der Abdeckeinrichtung 3, insbesondere an den Streupartikeln 32 und/oder den Streustrukturen 33, wird erreicht, dass das Licht von der Abdeckeinrichtung 3 diffus, homogen und/oder flächig in die Flugzeugkabine ausgekoppelt wird, wenn die Beleuchtungsvorrichtung 1 in der Kabinenstruktur integriert ist.

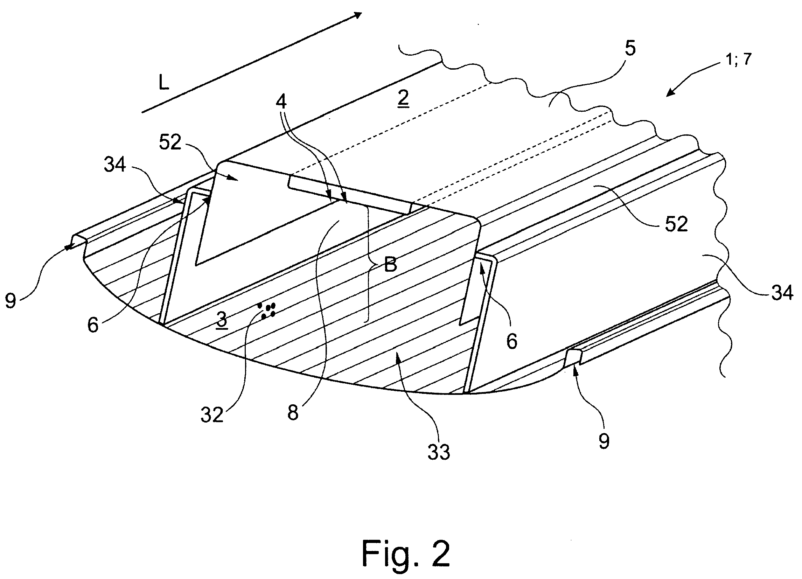

Figur 2 zeigt eine alternative Beleuchtungseinrichtung 1 als ein weiteres Ausführungsbeispiel der Erfindung. Einander entsprechende oder gleiche Teile sind in den Figuren 1 und 2 jeweils mit den gleichen Bezugszeichen versehen.

Die Beleuchtungsvorrichtung 1 weist die Leuchteinrichtung 2 mit den RGB-LEDs 4 und dem Lichtquellenträger 5 auf, wobei die RGB-LEDs auf dem Lichtquellenträger 5 in der Längsrichtung L der Beleuchtungsvorrichtung 1 in zwei nebeneinander verlaufenden Reihen angeordnet sind.

Der Lichtquellenträger 5 ist in der Schnittansicht rechteckig ausgebildet und weist zwei Seitenflächen 52 auf, die sich vertikal zur Längsrichtung L erstrecken. Er ist aus dem biegesteifen, insbesondere steifen und/oder starren Kunststoff-, Verbundstoff- oder Pressspanmaterial gebildet.

Die Beleuchtungsvorrichtung 1 weist auch die Abdeckeinrichtung 3 auf. Diese ist in Längsrichtung L der Beleuchtungsvorrichtung 1 bogenförmig ausgebildet und weist Verbindungsflächen 34 auf, die vertikal zur Längsrichtung L gerichtet sind.

Die Beleuchtungsvorrichtung 1 ist als das einbaufertige Funktionsbauteil 7 ausgebildet, wobei die Abdeckeinrichtung 3 mechanisch mit der Leuchteinrichtung 3 zu einem einstückigen Bauteil gekoppelt und/oder verbunden ist.

Die gemeinsamen mechanischen Schnittstellen 6 für die Kopplung und/oder Verbindung sind an den Seitenflächen 52 der Leuchteinrichtung 2 als in Längsrichtung L der Beleuchtungseinrichtung 1 verlaufende Nuten und an den Verbindungsflächen 34 der Abdeckeinrichtung 3 als in die Nuten form- und/oder kraftschlüssig eingreifende Haken oder Clipse ausgebildet.

Die Abdeckeinrichtung 3 ist in die Leuchteinrichtung 2 eingehakt, eingeclipst oder eingeschoben, so dass sie einstückig miteinander zum einbaufertigen Funktionsbauteil 7 verbunden sind.

Wenn die Beleuchtungsvorrichtung 1 gewartet werden muss, z.B. wenn die RGB-LEDs 4 durch neue ersetzt werden müssen, kann die Abdeckeinrichtung 3 durch ein Lösen der mechanischen Kopplung und/oder Verbindung von der Leuchteinrichtung 3 abgenommen werden und so den Zugriff auf die RGB-LEDs 4 freigeben. Nach dem Wechsel der RGB-LEDs 4 kann die Abdeckeinrichtung 3 wieder in die Leuchteinrichtung 2 eingehakt, eingeclipst oder eingeschoben werden.

Die Abdeckeinrichtung 2 weist die Befestigungselemente 9 auf, durch die die Beleuchtungsvorrichtung 1 als das einbaufertige Funktionsbauteil 7 in der nicht gezeigten Haltestruktur der Kabinenstruktur integriert werden kann.

Die Befestigungselemente 9 sind als im Querschnitt hakenförmige Abschlüsse an der bogenförmigen Abdeckeinrichtung 3 ausgebildet, welche sich in Längsrichtung der Abdeckeinrichtung 2 erstrecken. Durch Einhaken oder Einschieben der Abdeckeinrichtung 3 in der/die Haltestruktur wird das Funktionsbauteil 7 an der Kabinenstruktur montiert.

Durch ein Aushaken oder Ausschieben der Befestigungselemente 9 kann die Beleuchtungsvorrichtung 1 als das Funktionsbauteil 7 einstückig wieder von der Kabinenstruktur abgenommen und bei Bedarf durch eine andere Beleuchtungsvorrichtung 1 ersetzt werden.

Wie bei der in Fig. 1 gezeigten Beleuchtungsvorrichtung 1 ist zwischen den RGB-LEDs 4 und der Abdeckeinrichtung ein Zwischenraum mit einer Breite von mindestens 2 cm, vorzugsweise mindestens 3 cm, insbesondere mindestens 4 cm angeordnet. Somit sind die RGB-LEDs 4 beabstandet von der Abdeckeinrichtung 3 angeordnet.

Die RGB-LEDs 4 strahlen das Licht in Richtung der Abdeckeinrichtung 3 ab. Da die Abdeckeinrichtung 3 lichtdurchlässig ausgebildet ist, kann das Licht durch diese hindurch scheinen und auf der zur Flugzeugkabine gerichteten Seite abgestrahlt werden.

Die im biegesteifen Trägermaterial der Abdeckeinrichtung 3 integrierten Streukörper 32 und/oder Streustrukturen 33 streuen das Licht beim Hindurchtreten durch die Abdeckeinrichtung 3, so dass das Licht flächig, homogen und/oder diffus in die Flugzeugkabine ausgekoppelt wird.

Die in den Figuren 1 und 2 gezeigten Beleuchtungseinrichtungen 1 sind so in der Kabinenstruktur integrierbar, das die Leuchteinrichtung 2 zu einer Flugzeugaußenseite gerichtet ist und die Abdeckeinrichtung 3 zur Flugzeugkabine, insbesondere in Richtung der darin befindlichen Passagiere. In dieser Ausgestaltung sind die Beleuchtungseinrichtungen 1 der Fig. 1 und 2 dazu ausgebildet, die Flugzeugkabine mit direktem Licht vor, während und/oder nach dem Flug zu beleuchten.

Weiterhin ist die Beleuchtungseinrichtung aus Fig. 1 und 2 als Stimmungslicht ausgebildet. Hierzu ist die Beleuchtungseinrichtung 1 mit einer nicht gezeigten Steuereinrichtung verbindbar, die die Beleuchtungseinrichtung 1 nach Bedarf zur Abstrahlung von Licht in den unterschiedlichen Lichtfarben und/oder in unterschiedlichen Lichtstärken ansteuert. Die Steuereinrichtung steuert ebenfalls an, ob und/oder wann die Beleuchtungsvorrichtung 1 deaktiviert werden soll, beispielsweise während eines Starts oder einer Landung des Flugzeugs.

Die Steuereinrichtung kann durch eine entsprechende Ansteuerung der Beleuchtungsvorrichtung 1 auch eine räumliche Unterscheidung der Flugzeugkabine in verschiedene Klassen und Zonen, wie beispielsweise in First und Business Class vornehmen. So kann sie die verschiedenen Zonen durch unterschiedliche Lichtfarben oder Lichtintensitäten für die Passagiere kennzeichnen.

### Bezugszeichenliste

- 1: Beleuchtungsvorrichtung
- 2: Leuchteinrichtung
- 3: Abdeckeinrichtung
- 31: Seitenkanten
- 32: Streupartikel
- 33: Streustrukturen
- 34: Verbindungsflächen
- 4: Lichtquellen/ RGB-LEDs
- 5: Lichtquellenträger
- 51: Außenkanten
- 52: Seitenflächen
- 6: mechanische Schnittstellen/Nuten
- 7: einbaufertiges Funktionsbauteil
- 8: Zwischenraum
- 9: Befestigungselemente/Schienen

## Patentansprüche

1. Beleuchtungsvorrichtung (1) zur Integration in eine Kabinenstruktur einer Flugzeugkabine,
mit mindestens einer Leuchteinrichtung (2), die dazu ausgebildet ist, Licht in die Flugzeugkabine abzustrahlen,
wobei die Leuchteinrichtung (2) eine Lichtquelle (4) und einen Lichtquellenträger (5) umfasst, auf dem die Lichtquelle (4) angeordnet ist,
mit mindestens einer lichtdurchlässigen Abdeckeinrichtung (3), die dazu ausgebildet ist, die Leuchteinrichtung (2) zur Flugzeugkabine hin zu verblenden,
wobei die Beleuchtungsvorrichtung (1) dazu ausgebildet ist, als ein einbaufertiges Funktionsbauteil (7) in der Kabinenstruktur integriert zu werden, wobei die Beleuchtungsvorrichtung (1) biegesteif ausgebildet ist, **dadurch gekennzeichnet, dass** die Beleuchtungsvorrichtung (1) eine an der Abdeckeinrichtung angeordnete Befestigungseinrichtung (9) umfasst, die zum form- und/oder kraftschlüssigen Eingriff in eine Haltestruktur an der Kabinenstruktur ausgebildet ist.

2. Beleuchtungsvorrichtung (1) nach Anspruch 1, **dadurch gekennzeichnet, dass** die Leuchteinrichtung (2) und die Abdeckeinrichtung (3) mindestens eine gemeinsame mechanische Schnittstelle (6) zur gegenseitigen Verbindung und/oder Kopplung zum einbaufertigen Funktionsbauteil (7) aufweisen.

3. Beleuchtungsvorrichtung (1) nach Anspruch 1 oder 2, **dadurch gekennzeichnet, dass** die mechanische Schnittstelle (6) als eine Schnapp-, Haken- und/oder Clipverbindung realisiert ist.

4. Beleuchtungsvorrichtung (1) nach Anspruch 1, **dadurch gekennzeichnet, dass** die Befestigungseinrichtung (9) als mindestens ein Haken ausgebildet ist, mit dem die Beleuchtungsvorrichtung (1) in die Haltestruktur einhakbar ist oder dass die Befestigungseinrichtung (9) als mindestens eine Schiene oder Leiste ausgebildet ist, mit der die Beleuchtungsvorrichtung (1) in die Haltestruktur einschiebbar ist.

5. Beleuchtungsvorrichtung (1) nach einem der vorhergehenden Ansprüche, **dadurch gekennzeichnet, dass** die Lichtquelle (4) als eine Vielzahl an Leuchtdioden (LEDs) ausgebildet ist.

6. Beleuchtungsvorrichtung (1) nach einem der vorhergehenden Ansprüche, **dadurch gekennzeichnet, dass** die Abdeckeinrichtung (3) dazu ausgebildet ist, die Lichtquelle (4) vor Berührung und/oder Beschädigung durch Passagiere in der Flugzeugkabine zu schützen.

7. Beleuchtungsvorrichtung (1) nach einem der vorhergehenden Ansprüche, **dadurch gekennzeichnet, dass** die Abdeckeinrichtung (3) dazu ausgebildet ist, das von der Lichtquelle (4) erzeugte Licht flächig und/oder diffus in die Flugzeugkabine abzustrahlen.

8. Beleuchtungsvorrichtung (1) nach einem der vorhergehenden Ansprüche, **dadurch gekennzeichnet, dass** die Abdeckeinrichtung Streupartikel und/oder Streustrukturen aufweist, an denen das von der Lichtquelle (4) erzeugte Licht gestreut und/oder abgelenkt wird.

9. Beleuchtungsvorrichtung (1) nach einem der vorhergehenden Ansprüche,
**dadurch gekennzeichnet, dass** zwischen der Lichtquelle (4) und einer Sichtseite der Abdeckeinrichtung (3) ein Zwischenraum, vorzugsweise mit einem optischen Weg, von mindestens 2 cm, vorzugsweise von mindestens 3 cm, im Speziellen von mindestens 4 cm Breite (B) angeordnet ist.

10. Verfahren zur Montage einer Beleuchtungsvorrichtung (1) nach einem der Ansprüche 1 bis 9 in eine Kabinenstruktur, mit folgenden Schritten:
• Fertigung der Leuchteinrichtung (2)
• Fertigung der Abdeckeinrichtung (3)
• Gegenseitige Befestigung und/oder Kopplung der Leuchteinrichtung (2) und der Abdeckeinrichtung (3) zur Bildung der Beleuchtungsvorrichtung (1) als das einbaufertige Funktionsbauteil (7); und
• Anbringen der Beleuchtungsvorrichtung an der Kabinenstruktur mittels der an der Abdeckeinrichtung angeordneten, zum form- und/oder kraftschlüssigen Eingriff in eine Haltestruktur an der Kabinenstruktur ausgebildeten Befestigungseinrichtung (9).

11. Kabinenstruktur, mit der Beleuchtungsvorrichtung (1) nach einem der Ansprüche 1 bis 9, wobei die Kabinenstruktur ein Flugzeugskelett oder mindestens ein das Flugzeugskelett verkleidendes Verkleidungselement, insbesondere einen über den Sitzplätzen im Flugzeug angeordneten Gepäckstauraum, umfasst.

12. Kabinenstruktur nach Anspruch 11, **dadurch gekennzeichnet, dass** die Beleuchtungsvorrichtung (1) dazu ausgebildet ist, die Flugzeugkabine als ein direktes Licht zu beleuchten.

## Claims

1. Lighting apparatus (1) for integration into a cabin structure of an aircraft cabin,
having at least one light-emitting device (2) which is designed to emit light into the aircraft cabin,
wherein the light-emitting device (2) comprises a light source (4) and a light source carrier (5) on which the light source (4) is arranged,
having at least one transparent covering device (3) which is designed to screen the light-emitting device (2) in the direction of the aircraft cabin,
wherein the lighting apparatus (1) is designed to be integrated in the cabin structure as an installation-ready functional component (7),
wherein the lighting apparatus (1) is of flexurally rigid design,
**characterized in that**
the lighting apparatus (1) comprises a fastening device (9) which is arranged on the covering device and which is designed to engage into a retaining structure on the cabin structure in an interlocking and/or force-fitting manner.

2. Lighting apparatus (1) according to Claim 1, **characterized in that** the light-emitting device (2) and the covering device (3) have at least one common mechanical interface (6) for mutual connection and/or coupling to the installation-ready functional component (7).

3. Lighting apparatus (1) according to Claim 1 or 2, **characterized in that** the mechanical interface (6) is embodied as a snap-action, hook and/or clip connection.

4. Lighting apparatus (1) according to Claim 1, **characterized in that** the fastening device (9) is in the form of at least one hook with which the lighting apparatus (1) can be hooked into the retaining structure, or **in that** the fastening device (9) is in the form of at least one rail or bar by way of which the lighting apparatus (1) can be pushed into the retaining structure.

5. Lighting apparatus (1) according to one of the preceding claims, **characterized in that** the light source (4) is in the form of a large number of light-emitting diodes (LEDs).

6. Lighting apparatus (1) according to one of the preceding claims, **characterized in that** the covering device (3) is designed to protect the light source (4) against contact and/or damage by passengers in the aircraft cabin.

7. Lighting apparatus (1) according to one of the preceding claims, **characterized in that** the covering device (3) is designed to emit the light which is generated by the light source (4) into the aircraft cabin over an area and/or in a diffuse manner.

8. Lighting apparatus (1) according to one of the preceding claims, **characterized in that** the covering device has scattering particles and/or scattering structures at which the light which is generated by the light source (4) is scattered and/or deflected.

9. Lighting apparatus (1) according to one of the preceding claims, **characterized in that** an intermediate space, preferably with an optical path, of at least 2 cm, preferably of at least 3 cm, and especially of at least 4 cm, width (B) is arranged between the light source (4) and a visible side of the covering device (3).

10. Method for mounting a lighting apparatus (1) according to one of Claims 1 to 9 in a cabin structure, comprising the following steps:
• manufacturing the light-emitting device (2);
• manufacturing the covering device (3);
• mutually fastening and/or coupling the light-emitting device (2) and the covering device (3) for forming the lighting apparatus (1) as the installation-ready functional component (7); and
• fitting the lighting apparatus to the cabin structure by means of the fastening device (9) which is arranged on the covering device and is designed to engage in a retaining structure on the cabin structure in an interlocking and/or force-fitting manner.

11. Cabin structure comprising the lighting apparatus (1) according to one of Claims 1 to 9, wherein the cabin structure comprises an aircraft skeleton or at least one trim element which covers the aircraft skeleton, in particular a luggage compartment which is arranged above the seats in the aircraft.

12. Cabin structure according to Claim 11, **characterized in that** the lighting apparatus (1) is designed to illuminate the vehicle cabin as a direct light.

## Revendications

1. Dispositif d'éclairage (1) destiné à être intégré dans une structure de cabine d'une cabine d'aéronef,
comportant au moins un dispositif lumineux (2) qui est conçu pour émettre de la lumière dans la cabine d'aéronef,
dans lequel le dispositif lumineux (2) comprend une source de lumière (4) et un support de source de lumière (5) sur lequel est disposée la source de lumière (4),
comportant au moins un dispositif formant capot transparent (3) qui est conçu pour masquer le dispositif lumineux (2) vers la cabine d'aéronef,
dans lequel le dispositif d'éclairage (1) est conçu pour être intégré sous la forme d'un composant fonctionnel prêt à monter (7) dans la structure de cabine
dans lequel le dispositif d'éclairage (1) est réalisé de manière résistante à la flexion, **caractérisé en ce que** le dispositif d'éclairage (1) comprend un dispositif de fixation (9) disposé sur le dispositif formant capot, qui est conçu pour s'engager par complémentarité de forme et/ou par liaison de force dans une structure de retenue sur la structure de cabine.

2. Dispositif d'éclairage (1) selon la revendication 1, **caractérisé en ce que** le dispositif lumineux (2) et le dispositif formant capot (3) comprennent au moins une interface mécanique commune (6) destinée à effectuer une liaison et/ou un couplage mutuel au composant fonctionnel prêt à monter (7).

3. Dispositif d'éclairage (1) selon la revendication 1 ou 2, **caractérisé en ce que** l'interface mécanique (6) est réalisée sous la forme d'une liaison à encliquetage, à crochet et/ou par clipsage.

4. Dispositif d'éclairage (1) selon la revendication 1, **caractérisé en ce que** le dispositif de fixation (9) est réalisé sous la forme d'au moins un crochet au moyen duquel le dispositif d'éclairage (1) peut être accroché dans la structure de retenue ou **en ce que** le dispositif de fixation (9) est réalisé sous la forme d'au moins un rail ou d'au moins une barre, au moyen duquel le dispositif d'éclairage (1) peut être inséré dans la structure de retenue.

5. Dispositif d'éclairage (1) selon l'une quelconque des revendications précédentes, **caractérisé en ce que** la source de lumière (4) est réalisée sous la forme d'une pluralité de diodes électroluminescentes (LED).

6. Dispositif d'éclairage (1) selon l'une quelconque des revendications précédentes, **caractérisé en ce que** le dispositif formant capot (3) est conçu pour protéger la source de lumière (4) de tout contact et/ou de tout endommagement par des passagers présents dans la cabine d'aéronef.

7. Dispositif d'éclairage (1) selon l'une quelconque des revendications précédentes, **caractérisé en ce que** le dispositif formant capot (3) est conçu pour émettre la lumière générée par la source de lumière (4) en surface et/ou de manière diffuse dans la cabine d'aéronef.

8. Dispositif d'éclairage (1) selon l'une quelconque des revendications précédentes, **caractérisé en ce que** le dispositif formant capot comporte des particules diffusantes et/ou des structures diffusantes sur lesquelles la lumière générée par la source de lumière (4) est diffusée et/ou déviée.

9. Dispositif d'éclairage (1) selon l'une quelconque des revendications précédentes, **caractérisé en ce qu'**un espace intermédiaire, comportant de préférence un chemin optique, d'une largeur (B) d'au moins 2 cm, de préférence d'au moins 3 cm, et plus préférablement, d'au moins 4 cm est disposé entre la source de lumière (4) et une face visible du dispositif formant capot (3).

10. Procédé de montage d'un dispositif d'éclairage (1) selon l'une quelconque des revendications 1 à 9 dans une structure de cabine, comprenant les étapes suivantes :
- produire le dispositif lumineux (2),
- produire le dispositif formant capot (3),
- fixer et/ou coupler mutuellement le dispositif lumineux (2) et le dispositif formant capot (3) pour former le dispositif d'éclairage (1) sous la forme d'un composant fonctionnel prêt à monter (7) ; et
- monter le dispositif d'éclairage dans la structure de cabine au moyen du dispositif de fixation (9) disposé sur le dispositif formant capot et conçu pour être mis en prise par complémentarité de forme et/ou liaison par force dans une structure de retenue sur la structure de cabine.

11. Structure de cabine comportant un dispositif d'éclairage (1) selon l'une quelconque des revendications 1 à 9, dans lequel la structure de cabine comprend une cellule d'aéronef ou au moins un élément d'habillage habillant la cellule d'aéronef, notamment un compartiment à bagages disposé au-dessus des sièges dans l'aéronef.

12. Structure de cabine selon la revendication 11, **caractérisée en ce que** le dispositif d'éclairage (1) est conçu pour éclairer la cabine d'aéronef sous la forme d'une lumière directe.
